# EUROPÄISCHE PATENTSCHRIFT

(11) **EP 3 274 426 B1**
(45) Veröffentlichungstag und Bekanntmachung des Hinweises auf die Patenterteilung: **11.12.2019**
(21) Anmeldenummer: 16722770.1
(22) Anmeldetag: 24.03.2016
(51) Int. Cl.: C10K 1/04

(54) **VERFAHREN ZUM KÜHLEN EINES HEISSEN SYNTHESEGASES**
METHOD FOR COOLING A HOT SYNTHESIS GAS
PROCÉDÉ DE REFROIDISSEMENT D'UN GAZ DE SYNTHÈSE CHAUD

(30) Priorität: 24.03.2015 AT 1702015
(43) Veröffentlichungstag der Anmeldung: 31.01.2018
(73) Patentinhaber: Gussing Renewable Energy International Holding GmbH, 1040 Wien (AT)
(72) Erfinder: DICHAND, Michael, 4865 Nussdorf am Attersee (AT)
(74) Vertreter: Keschmann, Marc
(86) Internationale Anmeldenummer: PCT/AT2016/000029
(87) Internationale Veröffentlichungsnummer: WO 2016/149716

(56) Entgegenhaltungen:
- WO-A1-2013/062800
- WO-A1-2013/068643
- GB-A- 1 326 455

## Beschreibung

Die Erfindung betrifft ein Verfahren zum Kühlen eines wenigstens einen kondensierbaren Bestandteil, nämlich Teer, enthaltenden heißen Synthesegases, bei welchem das Synthesegas in einem mehrstufigen Kühlprozess nacheinander eine erste Kühlstufe, eine zweite Kühlstufe und eine dritte Kühlstufe durchläuft und das Synthesegas nach einer wenigstens teilweisen Kühlung wenigstens einem Abtrennungsschritt zum Abtrennen des wenigstens einen kondensierbaren Bestandteils unterworfen wird.

Die Erfindung betrifft insbesondere die Kühlung von Synthesegas, das in einer Vergasungsanlage unter Einsatz von Biomasse erzeugt wird. Unter Synthesegas wird allgemein ein Gas verstanden, dessen Hauptbestandteile CO und H₂ sind.

Insbesondere stammt das erfindungsgemäß zu kühlende Synthesegas aus einer Vergasungsanlage umfassend eine Vergasungszone für die Aufnahme eines stationären Wirbelbettes und eine Verbrennungszone für die Aufnahme eines transportierendes Wirbelbettes, wobei die Vergasungszone und die Verbrennungszone zur Ermöglichung eines Zirkulierens des Bettmaterials an zwei Stellen jeweils durch eine schleusenartige Einrichtung, wie eine Engstelle oder einen Siphon, miteinander verbunden sind, wobei die Vergasungszone eine Aufgabeöffnung für das Aufgeben von Brennmaterial, eine Gasabfuhr und einen Düsenboden zum Eindüsen von insbesondere Wasserdampf oder CO₂ aufweist und die Verbrennungszone eine Luftzufuhr für die Fluidisierung des aus der Vergasungszone in die Verbrennungszone eintretende Bettmaterials aufweist.

Eine Vergasungsanlage dieser Art ist aus der Patentschrift AT 405937 B bekannt geworden. Eine solche Vergasungsanlage kann dazu verwendet werden, um heterogene, biogene Brennstoffe und Kunststoffe zu verwerten und daraus ein möglichst stickstofffreies Brenngas mit hohem Brennwert oder Synthesegas zu gewinnen, das zur Stromerzeugung oder zur Synthese organischer Produkte geeignet ist. Dabei wird so vorgegangen, dass der Brennstoff in eine als stationäres Wirbelbett ausgebildete Vergasungszone, die durch Wasserdampf und/oder CO₂ fluidisiert ist, eingebracht und durch Reaktion mit den Fluidisierungsgasen bzw. dem Vergasungsmittel (Wasserdampf und/oder CO₂) und mit Hilfe der Wärme des Bettmaterials unter Luftabschluss entgast und teilweise vergast wird. Das dabei aufsteigende Produktgas wird abgezogen und das abgekühlte Bettmaterial gelangt mit dem nicht vergasten Restbrennstoff über schleusenartige Vorrichtungen, wie z.B. eine Engstelle, in die Verbrennungszone. In der Verbrennungszone wird das Bettmaterial mit dem Restbrennstoff durch Luft unter Bildung eines schnellen zirkulierenden Wirbelbettes fluidisiert und der Restbrennstoff verbrannt. Das Bettmaterial wird nach Abscheidung vom Verbrennungsabgas in einem Zyklon über schleusenartige Vorrichtungen, wie z.B. einen Siphon auf die stationäre Wirbelschicht der Vergasungszone aufgegeben.

Durch die Verwendung eines katalytisch wirkenden Bettmaterials, insbesondere auf Nickel- und/oder Niobbasis, lässt sich das bei der Entgasung und Vergasung gebildete Gas veredeln, indem praktisch nur mehr CO, CO₂ und H₂ als brennbare Bestandteile, sowie Wasserdampf vorhanden sind oder ein methanreiches Gas mit hohem Brennwert erzeugt wird.

Das die Vergasungsanlage verlassende Synthesegas hat in der Regel eine Temperatur von 600-800°C und enthält feste, staubförmige Bestandteile und kondensierbare Bestandteile, wie insbesondere Teer. Das Synthesegas muss daher einer Kühlung und einer Reinigung unterworfen werden. Meist wird hierbei so vorgegangen, dass das Synthesegas in einer Kühlvorrichtung zunächst soweit abgekühlt wird, dass die staubförmigen Bestandteile in einem Filter, insbesondere Gewebefilter abgeschieden werden können. Die Teerverunreinigungen werden in einem nachgeordneten Gaswäscher entfernt und das gereinigte, gekühlte Synthesegas kann nach Verdichtung mittels Gebläse direkt in einem Gasmotor verstromt werden.

Beim Abkühlen des kondensierbare Bestandteile, insbesondere Teer, enthaltenden Synthesegases besteht ein Problem dahingehend, dass die kondensierbaren Bestandteile kondensieren und sich an der Kühlvorrichtung, insbesondere dem jeweiligen Wärmetauscher ablagern und diesen nach einiger Zeit verstopfen, was zu einem Stillstand der Anlage führt. Im Fall von Teer ist ein Kondensieren bei Temperaturen von 200-500°C zu beobachten. Das Synthesegas wird vorteilhafter Weise aber bereits vor dem Abtrennungsschritt auf ein Temperaturniveau von unter 200°C abgekühlt, da ein solch tiefes Temperaturniveau im Rahmen des Abtrennungsschrittes die Verwendung von Standard-Filtern für die Abtrennung von festen Bestandteilen erlaubt, wobei solche Filter zu geringeren Kosten verfügbar sind als Spezialfilter für Hochtemperaturanwendungen. Zudem führen geringere Temperaturen zu einer Verringerung des Synthesegasvolumens, womit die erforderliche Filterfläche sinkt, was ebenfalls zu Kosteneinsparungen führt.

Die Kühlung erfolgt dabei meist in mehreren aufeinanderfolgenden Stufen, um die Baulänge der einzelnen Wärmetauscherstufen in vertretbaren Grenzen zu halten und auch die Geschwindigkeit in den einzelnen Stufen optimal einzustellen. Im Endbereich des letzten Wärmetauschers vor der Abtrennungsstufe ist bei einer Abkühlung unter die Kondensationstemperatur des wenigstens einen kondensierbaren Bestandteils ein Ablagerung des Kondensats zu beobachten.

WO 2013/062800 beschreibt ein Verfahren für Vergasung von Biomasse zu Synthesegas und ein Verfahren zur Gaskühlung unter Produktion eines Kondensats.

Es besteht somit die Aufgabe, ein Verfahren zum Kühlen von Synthesegas zu schaffen, mit welchem bzw. welcher eine Abkühlung des Synthesegases vor dem Abtrennungsschritt auf Temperaturen unterhalb der Kondensationstemperatur gelingt ohne dass das dabei entstehende Kondensat eine Beeinträchtigung der Anlage verursacht.

Zur Lösung dieser Aufgabe sieht die Erfindung bei einem Verfahren der eingangs genannten Art ein Verfahren nach Anspruch 1 vor.

Die Kühlstufen sind also so gestaltet, dass das Synthesegas in der ersten Kühlstufe lediglich auf eine Temperatur oberhalb der Kondensationstemperatur des wenigstens einen kondensierbaren Bestandteils abgekühlt, sodass eine Kondensation von Teer in dieser Stufe mit Sicherheit vermieden wird. In dieser Kühlstufe können somit herkömmliche Wärmetauscher verwendet werden. Die Erfindung ist in diesem Zusammenhang bevorzugt derart weitergebildet, dass das Synthesegas in der ersten Kühlstufe durch wenigstens einen, bevorzugt zwei nacheinander durchströmte, Wärmetauscher geleitet wird. Besonders bevorzugt können in der ersten Kühlstufe einfach bauende, kostengünstige Wärmetauscher, wie z.B. wenigstens ein Rauchrohrkühler zum Einsatz gelangen. Bei einem Rauchrohrkühler ist wenigstens ein bevorzugt vertikal stehendes Rauchrohr von einem Kühlmantel umschlossen. Während durch das Rauchrohr das zu kühlende Synthesegas geführt wird, ist der Kühlmantel von einem Kühlmedium, wie z.B. Wasser durchflossen, das sich an dem Rauchrohr erwärmt.

Eine weitere Abkühlung des Synthesegases, nämlich eine solche unter die Kondensationstemperatur des wenigstens einen kondensierbaren Bestandteils, erfolgt nun erfindungsgemäß nicht in einem weiteren Wärmetauscher, sondern durch das Zumischen von kaltem Synthesegas zu dem Hauptstrom des Synthesegases, womit ein Quenchen des Synthesegases erreicht wird. Das kalte Synthesegas wird hierbei nach der dritten Kühlstufe und dem wenigstens einen Abtrennungsschritt abgezweigt und ist daher weitestgehend frei von dem wenigstens einen kondensierbaren Bestandteil, nämlich Teer. Dadurch, dass die zweite Kühlstufe lediglich eine Mischvorrichtung zum Vermischen des Synthesegashauptstroms mit dem rückgeführten kalten Synthesegas erfordert, kann das Auftreten von Kondensat in dieser Kühlstufe ohne weiteres in Kauf genommen werden, weil das Risiko einer Ablagerung von Kondensat gering ist und die Zumischung des rückgeführten, kalten und gereinigten Synthesegases außerdem zu einer entsprechenden Verdünnung, d.h. einer Verringerung der Kondensatanteils bezogen auf die Gesamtmenge des Synthesegases führt.

Das kalte und gereinigte Synthesegas, welches rückgeführt wird, wird bevorzugt nach dem Durchlaufen einer Gaswäsche erhalten. Die Erfindung ist in diesem Zusammenhang bevorzugt derart weitergebildet, dass die dritte Kühlstufe und der Abtrennungsschritt das Waschen des Synthesegases in einem Gaswäscher umfasst.

Der Abtrennungsschritt kann eine Filterung zur Abtrennung fester Bestandteile umfassen, insbesondere zusätzlich zur erwähnten Gaswäsche. Vorzugsweise ist die Filterung der Gaswäsche vorgeordnet.

Bevorzugt ist vorgesehen, dass das Synthesegas in der ersten Kühlstufe auf eine Temperatur von > 280°C abgekühlt wird. Dabei handelt es sich um einen Temperaturbereich, in welchem beispielsweise Teer noch nicht oder lediglich in geringem Umfang kondensiert.

Es wird weiters so vorgegangen, dass das Synthesegas in der zweiten Kühlstufe auf eine Temperatur von ≤ 200°C abgekühlt wird, d.h. auf eine Temperatur, bei welcher Teer kondensiert.

In der dritten Kühlstufe wird das Synthesegas vorzugsweise auf eine Temperatur von 20-70°C abgekühlt.

Eine Temperaturregelung gelingt gemäß einer bevorzugten Ausführungsform dadurch, dass die rückgeführte Synthesegasmenge in Abhängigkeit von Messwerten eines zwischen der zweiten und der dritten Kühlstufe angeordneten Temperatursensors geregelt wird. Der Temperatursensor misst somit die Temperatur des Synthesegases nach der zweiten Kühlstufe (Ist-Wert, vergleicht diesen Wert mit dem jeweils gewünschten Soll-Wert, wobei in Abhängigkeit von der Differenz zwischen Soll- und Ist-Wert, die Menge des rückgeführten kalten Synthesegases entweder erhöht oder reduziert wird.

Eine Vorrichtung zur Durchführung des erfindungsgemäßen Verfahrens umfasst eine erste Kühlvorrichtung für die erste Kühlstufe, eine zweite Kühlstufe, eine dritte Kühlvorrichtung für die dritte Kühlstufe und wenigstens eine der zweiten Kühlstufe in Strömungsrichtung des Synthesegases nachgeordnete Trennvorrichtung für den Abtrennungsschritt. Die Vorrichtung zeichnet sich im Wesentlichen dadurch aus, dass die zweite Kühlstufe eine Rückführungsleitung zum Rückführen einer Teilmenge von nach der dritten Kühlstufe und der wenigstens einen Trennvorrichtung abgezweigtem Synthesegas in den Synthesegasstrom umfasst.

Eine bevorzugte Ausbildung der Vorrichtung sieht vor, dass die erste Kühlvorrichtung wenigstens einen, bevorzugt zwei nacheinander durchströmbare, Wärmetauscher umfasst. Der Wärmetauscher kann hierbei von einem Rauchrohrkühler gebildet sein.

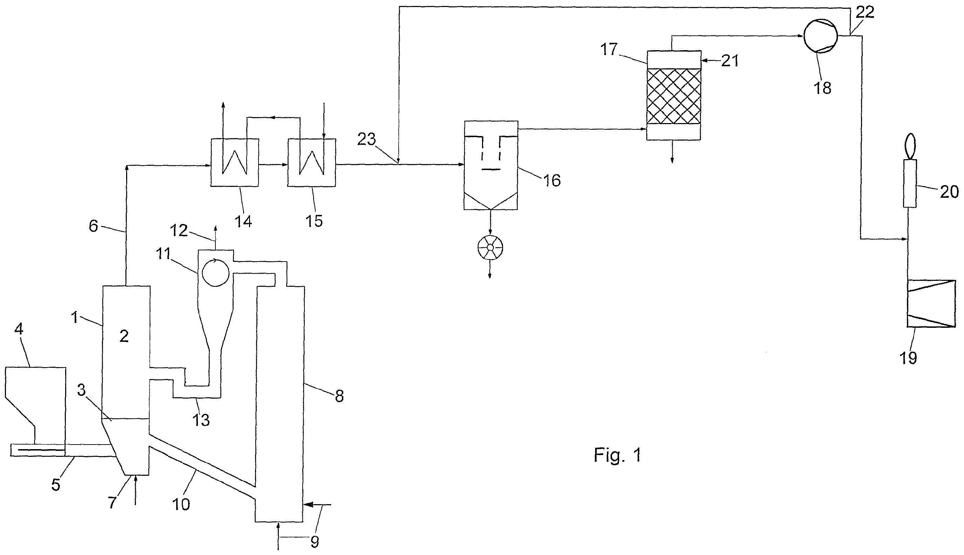

Die dritte Kühlvorrichtung und die Trennvorrichtung umfassen mit Vorteil einen Gaswäscher. Die Trennvorrichtung kann zusätzlich ein Filter zur Abtrennung fester Bestandteile umfassen. Die Erfindung wird nachfolgend anhand eines in der Zeichnung schematisch dargestellten Ausführungsbeispiels näher erläutert. Fig. 1 zeigt ein Fließschema einer Anlage zur Vergasung von Biomasse soweit es für die Erläuterung der vorliegenden Erfindung von Bedeutung ist.

Die Vergasung erfolgt in einem Doppel-Wirbelschicht-Vergaser des in der AT 405937 B beschriebenen Typs. Der Doppel-Wirbelschicht-Vergaser umfasst einen Vergasungsreaktor 1 mit einer Vergasungszone 2 für die Aufnahme eines Wirbelbettes 3. Dem Vergasungsreaktor 1 wird Biomasse z.B. in Form von Holzschnitzeln zugeführt. Die Zuführung erfolgt aus einem Aufgabebehälter 4 mittels einer Fördervorrichtung 5, z.B. einem Schnecken- oder Kolbenförderer. Im Vergasungsreaktor 1 erfolgt die Gasifikation der eingesetzten Biomasse bei atmosphärischem Druck und Temperaturen von ca. 850°C und unter weitestgehendem Sauerstoffabschluss. Der Vergasungsreaktor 1 weist einen Düsenboden 7 zum Eindüsen von insbesondere Wasserdampf oder CO₂ sowie eine Gasabfuhr 6 zum Abführen des in der Vergasungszone 2 entstehenden Synthesegases auf. Das Eindüsen von Wasserdampf und/oder CO₂ stellt die Umwälzung des Wirbelbetts 3 und damit die gleichmäßige Erhitzung des Brennstoffes sicher.

Der Doppel-Wirbelschicht-Vergaser umfasst weiters eine Brennkammer 8 für die Aufnahme eines Wirbelbettes, in das bei 9 Luft eingedüst wird. Der Vergasungsreaktor 1 und die Brennkammer 8 sind im Bodenbereich durch eine schleusenartige Einrichtung 10 miteinander verbunden, sodass der im Vergasungsreaktor 1 nach unten absinkende entgaste und teilvergaste Brennstoff gemeinsam mit dem Bettmaterial in die Brennkammer 8 gelangen kann. In der Brennkammer 8 erfolgt eine Verbrennung des über die schleusenartige Einrichtung 10 zugeführten Brennstoffs, wodurch die Temperatur des Wirbelbetts der Brennkammer 8 steigt. In einem Zyklon 11 erfolgt die Abtrennung des Bettmaterials vom Abgas. Das Abgas wird bei 12 abgeführt und ggf. einer Abgasbehandlung zugeführt. Das Bettmaterial wird über einen Siphon 13 wieder zurück in den Vergasungsreaktor 1 geleitet und bewirkt dort den Wärmeeintrag.

Das Bettmaterial kann beispielsweise aus Olivin und Asche bestehen, welches im Kreislauf durch den Vergasungsreaktor 1 und die Brennkammer 8 zirkuliert. Die beiden Wirbelschichtsysteme des Vergasungsreaktors 1 und der Brennkammer 8 sind also durch einen Bettmaterialkreislauf verbunden, wobei der Gasaustausch durch den Siphon 13 verhindert wird.

Das heiße, staub- und teerhaltige Synthesegas wird zunächst in den Wärmetauschern 14 und 15 soweit abgekühlt, dass der Teer noch nicht kondensiert, wodurch Ablagerungen im Wärmetauscher 15 verhindert werden. Danach werden die staubförmigen Bestandteile in einem Gewebefilter 16 abgeschieden. Der Hauptanteil der Teerverunreinigungen wird dann im Gaswäscher 17 entfernt und das Synthesegas kann nach Verdichtung mittels des Gebläses 18 direkt in einem Gasmotor 19 verstromt werden. Überschüssiges Synthesegas wird einer Gasfackel 20 zugeführt. Als Waschmedium für den Gaswäscher 17 kann beispielsweise Biodiesel genutzt werden, der dem Gaswäscher bei 21 zugeführt wird und in dem sich die Teerbestandteile gut lösen.

Eine Teilmenge des gereinigten und gekühlten Synthesegases wird bei 22 abgezweigt und dem Synthesegasstrom bei 23, d.h. zwischen dem Wärmetauscher 15 und dem Gewebefilter 16, rückgeführt. Auf Grund der Vermischung des aus dem Wärmetauscher 15 kommenden Synthesegases mit dem rückgeführten Synthesegas wird eine Kühlung erreicht, welche ggf. zu einem Kondensieren der Teerbestandteile führt.

Es sind somit insgesamt drei Kühlstufen realisiert. In der ersten Kühlstufe wird das Synthesegas in den Wärmetauschern 14 und 15 von mehr als 800°C auf ungefähr 250-300°C gekühlt. Die zweite Kühlstufe wird durch Vermischen des Synthesegases mit der bei 23 rückgeführten Synthesegasmenge erreicht, wobei dieser Quenchvorgang eine Abkühlung des Synthesegase auf 150-200°C bewirkt. In der dritten Kühlstufe wird das Synthesegase in dem Gaswäscher 17 auf ca. 20-60°C gekühlt.

## Patentansprüche

1. Verfahren zum Kühlen eines wenigstens einen kondensierbaren Bestandteil, nämlich Teer, enthaltenden heißen Synthesegases, bei welchem das Synthesegas in einem mehrstufigen Kühlprozess nacheinander eine erste Kühlstufe, eine zweite Kühlstufe und eine dritte Kühlstufe durchläuft und das Synthesegas nach einer wenigstens teilweisen Kühlung wenigstens einem Abtrennungsschritt zum Abtrennen des wenigstens einen kondensierbaren Bestandteils unterworfen wird, **dadurch gekennzeichnet, dass** das Synthesegas in der ersten Kühlstufe auf eine Temperatur oberhalb der Kondensationstemperatur des wenigstens einen kondensierbaren Bestandteils abgekühlt wird und das Synthesegas in der zweiten Kühlstufe auf eine Temperatur unterhalb der Kondensationstemperatur des wenigstens einen kondensierbaren Bestandteils, nämlich auf eine Temperatur von ≤ 200°C, abgekühlt wird und die zweite Kühlstufe das Rückführen einer Teilmenge von nach der dritten Kühlstufe und dem wenigstens einen Abtrennungsschritt abgezweigtem Synthesegas in den Synthesegasstrom umfasst.

2. verfahren nach Anspruch 1, **dadurch gekennzeichnet, dass** das Synthesegas in der ersten Kühlstufe durch wenigstens einen, bevorzugt zwei nacheinander durchströmte, Wärmetauscher (14, 15) geleitet wird.

3. Verfahren nach Anspruch 1 oder 2, **dadurch gekennzeichnet, dass** die dritte Kühlstufe und der Abtrennungsschritt das Waschen des Synthesegases in einem Gaswäscher (17) umfasst.

4. Verfahren nach Anspruch 1, 2 oder 3, **dadurch gekennzeichnet, dass** der Abtrennungsschritt eine Filterung zur Abtrennung fester Bestandteile umfasst.

5. Verfahren nach einem der Ansprüche 1 bis 4, **dadurch gekennzeichnet, dass** das Synthesegas in der ersten Kühlstufe auf eine Temperatur von > 280°C abgekühlt wird.

6. Verfahren nach einem der Ansprüche 1 bis 5, **dadurch gekennzeichnet, dass** das Synthesegas in der zweiten Kühlstufe auf eine Temperatur von 150-200°C abgekühlt wird.

7. Verfahren nach einem der Ansprüche 1 bis 6, **dadurch gekennzeichnet, dass** das Synthesegas in der dritten Kühlstufe auf eine Temperatur von 20-70°C abgekühlt wird.

8. Verfahren nach einem der Ansprüche 1 bis 7, **dadurch gekennzeichnet, dass** die rückgeführte Synthesegasmenge in Abhängigkeit von Messwerten eines zwischen der zweiten und der dritten Kühlstufe angeordneten Temperatursensors geregelt wird.

## Claims

1. A method for cooling a hot synthesis gas containing at least one condensable constituent part, namely tar, in which the synthesis gas in a multi-stage cooling process passes through a first cooling stage, a second cooling stage and a third cooling stage one after the other and the synthesis gas, after an at least partial cooling, is subjected to at least one separation step for separating the at least one condensable constituent part, **characterized in that** the synthesis gas in the first cooling stage is cooled down to a temperature above the condensation temperature of the at least one condensable constituent part and the synthesis gas is cooled in the second cooling stage to a temperature below the condensation temperature of the at least one condensable constituent part, namely to a temperature of ≤ 200°C, and the second cooling stage comprises the recirculation of a part quantity of synthesis gas branched off after the third cooling stage and after the at least one separation step, into the synthesis gas flow.

2. The method according to claim 1, **characterized in that** the synthesis gas in the first cooling stage is conducted through at least one, preferably two heat exchangers (14, 15) flowed through one after the other.

3. The method according to claim 1 or 2, **characterized in that** the third cooling stage and the separation step comprises the scrubbing of the synthesis gas in a gas scrubber (17).

4. The method according to claim 1, 2 or 3, **characterized in that** the separation step comprises a filtration for separating solid constituent parts.

5. The method according to any one of claims 1 to 4, **characterized in that** the synthesis gas is cooled down to a temperature of > 280°C in the first cooling stage.

6. The method according to any one of claims 1 to 5, **characterized in that** the synthesis gas is cooled down to a temperature of 150-200°C in the second cooling stage.

7. The method according to any one of claims 1 to 6, **characterized in that** the synthesis gas is cooled down to a temperature of 20-70°C in the third cooling stage.

8. The method according to any one of claims 1 to 7, **characterized in that** the recirculated synthesis gas quantity is regulated as a function of measurement values of a temperature sensor arranged between the second and the third cooling stage.

## Revendications

1. Procédé pour refroidir un gaz de synthèse chaud contenant au moins un composant condensable, notamment du goudron, dans lequel le gaz de synthèse passe, dans un processus de refroidissement en plusieurs étapes, consécutivement par une première étape de refroidissement, une deuxième étape de refroidissement et une troisième étape de refroidissement et le gaz de synthèse est soumis après un refroidissement au moins partiel à au moins une étape de séparation pour séparer l'au moins un composant condensable, **caractérisé en ce que** le gaz de synthèse dans la première étape de refroidissement est refroidi à une température supérieure à la température de condensation de l'au moins un composant condensable et le gaz de synthèse dans la deuxième étape de refroidissement est refroidi à une température inférieure à la température de condensation de l'au moins un composant condensable, notamment à une température ≤ 200 °C, et la deuxième étape de refroidissement comprend la réintroduction dans le courant de gaz de synthèse d'une quantité partielle du gaz de synthèse dérivé après la troisième étape de refroidissement et l'au moins une étape de séparation.

2. Procédé selon la revendication 1, **caractérisé en ce que** le gaz de synthèse est conduit dans la première étape de refroidissement à travers au moins un, de préférence deux échangeurs de chaleur (14, 15) parcourus consécutivement.

3. Procédé selon la revendication 1 ou 2, **caractérisé en ce que** la troisième étape de refroidissement et l'étape de séparation comprennent le lavage du gaz de synthèse dans un dispositif de lavage de gaz (17).

4. Procédé selon la revendication 1, 2 ou 3, **caractérisé en ce que** l'étape de séparation comprend un filtrage pour la séparation de composants solides.

5. Procédé selon l'une quelconque des revendications 1 à 4, **caractérisé en ce que** le gaz de synthèse est refroidi dans la première étape de refroidissement à une température de > 280 °C.

6. Procédé selon l'une quelconque des revendications 1 à 5, **caractérisé en ce que** le gaz de synthèse dans la deuxième étape de refroidissement est refroidi à une température de 150 à 200 °C.

7. Procédé selon l'une quelconque des revendications 1 à 6, **caractérisé en ce que** le gaz de synthèse dans la troisième étape de refroidissement est refroidi à une température de 20 à 70 °C.

8. Procédé selon l'une quelconque des revendications 1 à 7, **caractérisé en ce que** la quantité de gaz de synthèse réintroduite est réglée en fonction de valeurs mesurées d'un capteur de température disposé entre les deuxième et troisième étapes de refroidissement.
